# EUROPEAN PATENT APPLICATION

(11) **EP 2 154 616 A1**
(43) Date of publication of application: **17.02.2010**
(21) Application number: 08014577.4
(22) Date of filing: 16.08.2008
(51) Int. Cl.: G06F 17/30

(54) **Distributed spatial information integration method and system**

(71) Applicant: EADS Deutschland GmbH, 85521 Ottobrunn (DE)
(72) Inventor: Hoche, Michael, Dr., 88090 Immenstaad (DE); Hatger, Carsten, 88677 Markdorf (DE); Jonas, Jürgen, 88090 Immenstaad (DE)
(74) Representative: Riegel, Werner

(57) **Abstract**

The invention concerns a method for integrating information objects sharing a common geometry into a spatial data structure, the method comprising the step of inserting an information object into the data structure at an anchor, wherein that anchor is defined by a region with respect to the geometry, where the information object is relevant.

## Description

This invention concerns a method for integrating information objects, a method for integrating a system, and the resulting system.

Network-centric operations are a new doctrine seeking to translate an information advantage that is enabled by advanced information technology.

Domain information can be grouped into categories like resources, events, location etc. In the domain of military for instance in sensor and effectors. Information exchange and in general resources can be made available in information grids, see, http://en.wikipedia.org/wiki/Global_Information_Grid.

The information grid should provide all potential accessible information like a weapon grid comprising accessible weapons or effectors, a command and control grid comprising accessible commanders. These grids are sub-summed by an information grid concept, where this information grid spans the whole knowledge domain. Each action is a decision based on the available information in the grid. Thus the access and the availability of stored data that constitutes a common relevant operational picture is a core element of network centric operation.

By definition the common operational picture is the operational but virtual element, which comprises all operational, e.g. battle space related, information.

The infrastructure keeping the information is considered as a large scale distributed data store that is realized in the art as either specialized data structures hyper/multimedia documents, or embedded as a scheme into a relational or object data bases, like - in the military domain - the Information Exchange Data Model of the Multilateral Interoperability Program, see http://www.mip-site.org/.

The information grid has to cope with integrity and evolution maintenance, clustering, data retrieval, data mining, and data aggregation, association, and fusion. The information grid is functionally seen as a means for consistent data provisioning where the data have several formats and where the data underlies certain constraints.

Information from various sources like sensors as well as prior known information specific to the actual mission or operation (retrieved from archives, data bases, libraries, etc.) is processed for providing complete situation pictures. A user should be able to retrieve a view on this data with respect to his interests.

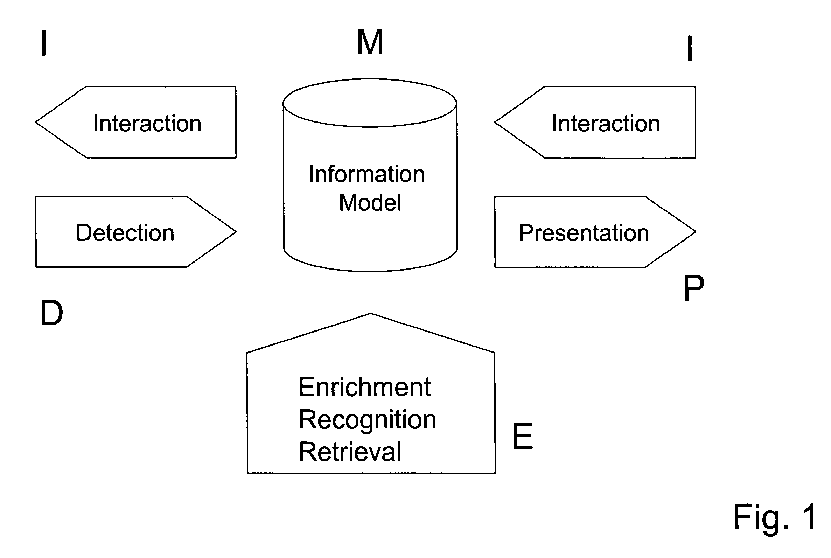

To simplify the network centric environment main functional categories common operational relevant picture system as in Fig. 1 are assumed. There is a model M in the center that is compiled from detections D from the System. The model might even control the observation by interactions and the model serves a presentation P of an operational picture to an assumed user. This user might interact with the model. And the model will be enriched by recognition procedures identifying certain observed aspects.

The presentation and the user interactions enables controlling the situation in a feedback loop of virtual presentation of a real object, interaction forcing a change of the real object by means of effectors, and presentation of the real object's transition. This type of architecture is known from sensor image processors but is now applied to a global information domain.

The United States Patent No. 6,535,88 discloses a distributed computer database system connected to a network, e.g., the Internet or on an intranet, indexes interests of agents that have registered with the system, examines information objects, for example, that reside on the network, and, responsive to a match with the registered agents' interests, specifies to the agents the relevant information objects.

As a major technical problem for identifying a view on this data with respect to his interests it remains that the agent in the above system understands the user's needs and compiles from this understanding fast and efficient a view.

Beside that the underlying information model has to handle a variety of observation information types. Simple observations are required to be recombined together to useful pieces of information, i.e. more complex information within an appropriate context. A basis for observation might be measurements of a grid of sensors as well as certain domain knowledge.

The United Stated Patent Application No. 2005/209997 discloses a system for providing an open database model that allows the combining of spatial and attributes data in a single relational database. The integration of spatial and attribute data allows the data to be accessed by either standard structured query language or a geometric query. This provides enhanced performance by avoiding proliferation of segmentation; open dynamic segmentation; integrated temporal data; and automated database maintenance.

This has the draw back that each geometric query interacts with the whole set of stored relational objects.

Concerning e.g. Multilateral Interoperability Program database implementation a range of questions remain unresolved. The 2.0 design has raised some concerns among developers, particularly with the issue of system performance. The decision to use "tie tables" between each major entity table in the data base has increased the number of table joins that must occur to obtain meaningful results from the data base and the trigger complexity to support data propagation has increased significantly.

The elegant solution to the above stated problems and the invention is a dynamically decomposable spatial data structure or spatial temporal data structure for storing information objects sharing a common geometry, where information object are allocated to an anchor which represents an area, i.e. a subspace, with respect to the geometry.

Instead of decoupling spatial information it is suggested to integrate any information objects sharing a common geometry into a spatial data structure or spatial temporal data structure.

Information objects here means an allocated region of storage representing a discrete object, see http://en.wikipedia.org/wiki/Object %28computer science%29 and http://en.wikipedia.org/wiki/Entity-relationship model. Geometry means a part of mathematics concerned with questions of size, shape, relative positions and with properties of space, see http://en.wikipedia.org/wiki/Geometry.

Preferable the area is defined as the subspace where the information object is relevant. The notion of relevance is in turn defined by a problem, where the solution to this problem requires the prior identification of the necessary, i.e. the relevant elements from which a conclusion can be constructed. Such a problem might be in a military scenario a question like what are the dangerous objects, where the area of an information object would become the effective sphere.

For instance such a problem could be defined by a predicate that is solved by means of spatial-temporal reasoning, see hftp://en.wikipedia.org/wiki/Spatial-temporal reasoning.

The dynamically decomposable spatial data structure in the solution described above have the advantage that the embedding (and the aggregation) of various observations, e.g. from different sensors or observers becomes naturally (canonically) possible. Each observation could be attached to its relevant region inside the information model, independently and in a distributed manner, i.e. the spatial property defines the embedding of an observation into the information model.

Another advantage is that the decomposition property of the model is a canonical distribution mechanism. Thus the system is designed scaleable.

Further advantages are that the decomposition property enables a fault tolerance based on overlapping regions by the cost of synchronization. Thus there is no need of any complex process synchronization.

The decomposition property enables adaptive processing with respect to the density of observations. That means dense environments (locally concentrated observation) are decomposed in order for load balancing.

In advance the decomposition property allows naturally applying agent and object-oriented techniques. Thus the definition of the processing (information aggregation, fusion, etc) is canonically object oriented, since the observations are embedded and results of processing can be attached to regions since the main results inherit the spatial properties.

The accompanying drawings, which are incorporated in and form part of the specification, illustrate the present invention, when viewed with reference to the description, wherein:
- Fig. 1: shows a system diagram of an information system according to the invention;
- Fig. 2: shows a component diagram of an information system according to the invention;
- Fig. 3: shows a spatial decomposition illustrating the method according to the invention;
- Fig. 4: shows embedded information objects in the spatial decomposition that is applied in the system according to the invention;
- Fig. 5: shows a mapping of spatial decomposition onto peers in the system according to the invention;
- Fig. 6: shows a balancing of the spatial decomposition that is applied in the system according to the invention;
- Fig. 7: shows the retrieval mechanism based on the spatial decomposition according to the invention;
- Fig. 8 - Fig 13: illustrate the method according to the invention, where

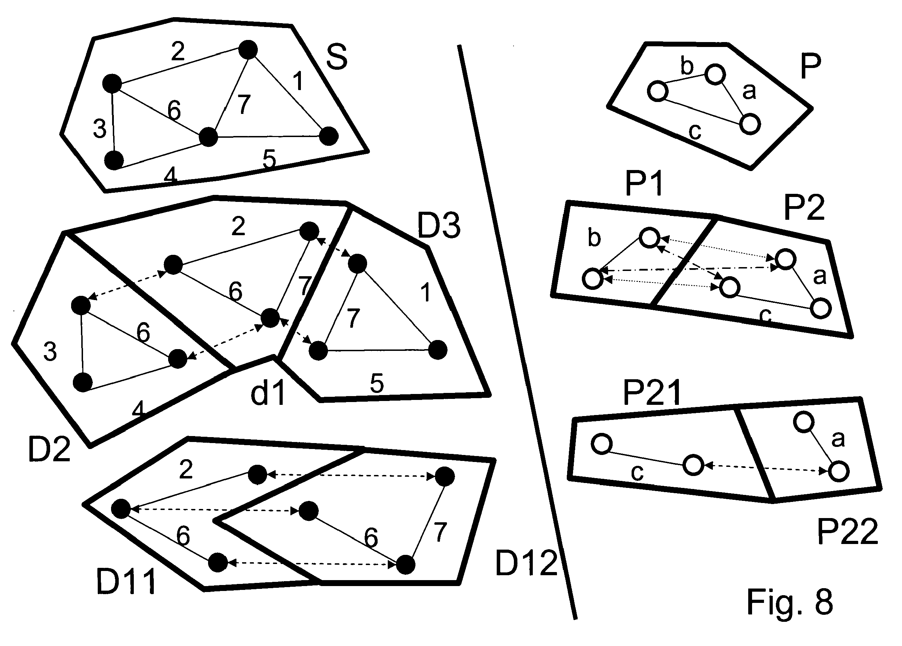

- Fig. 8: shows an example discrete geometric decomposition of a search space and a pattern that is applied in the method according to the invention;

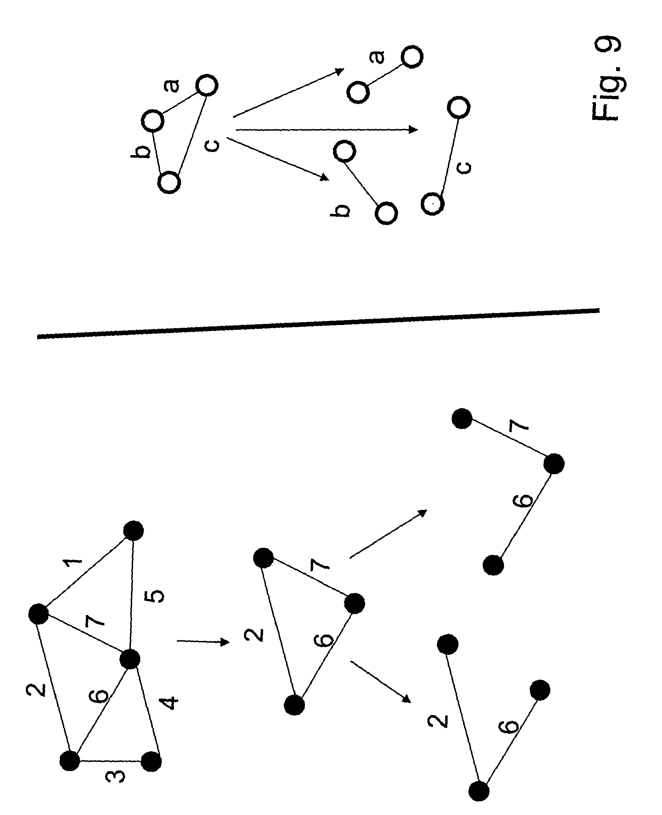

- Fig. 9: shows an example covering of a search space and a pattern that is applied in the method according to the invention;

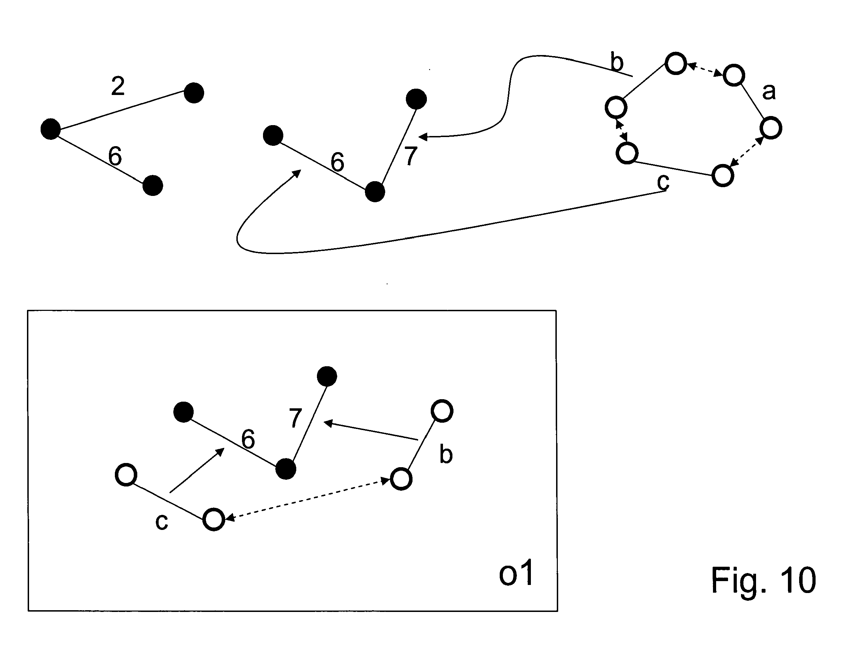

- Fig. 10: shows sub occurrences of pattern parts in a part of the search space;

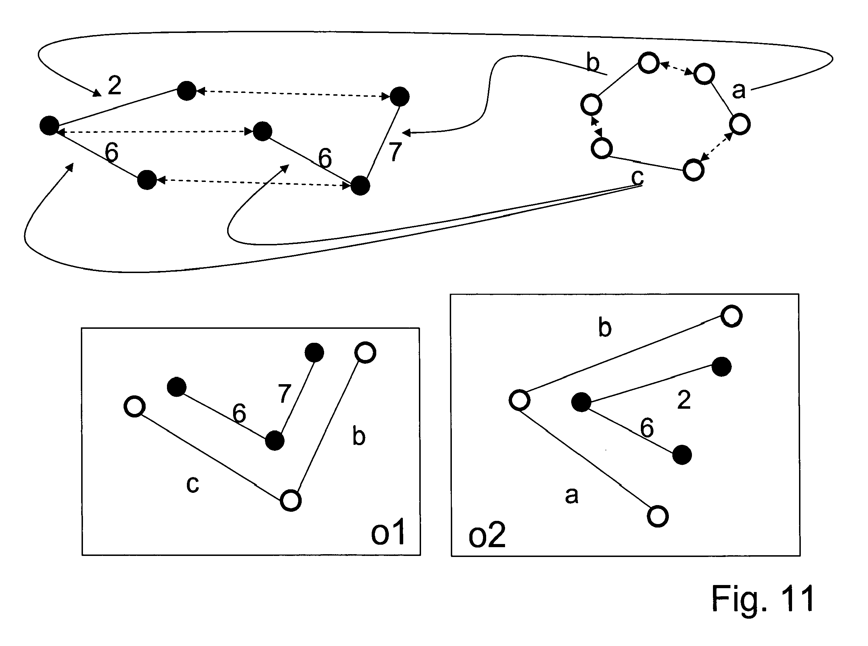

- Fig. 11: shows the reconstruction of sub occurrences of pattern parts in the part of the search space applied in the method according to the invention;

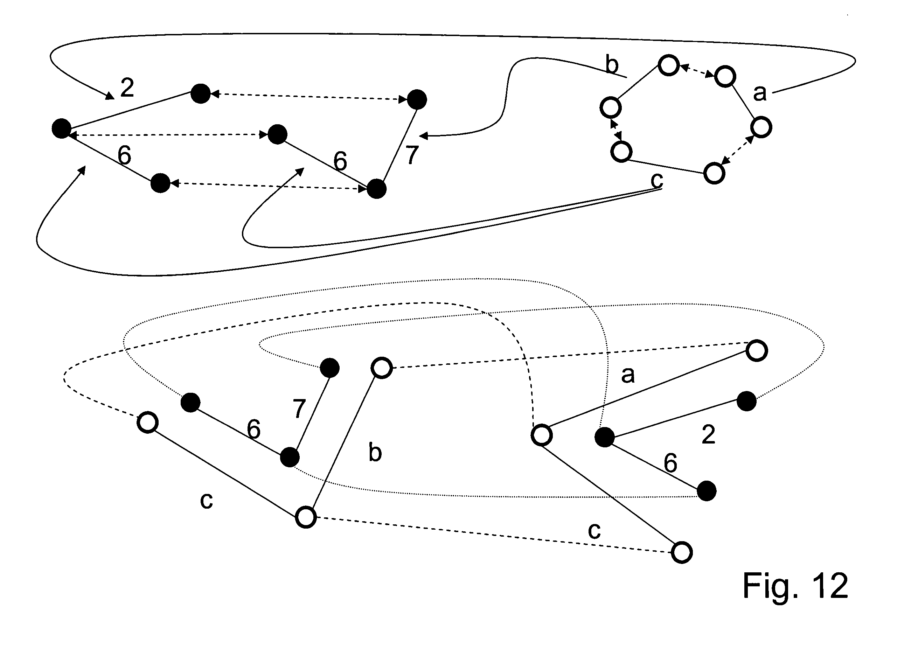

- Fig. 12: shows the reconstruction of an occurrence of the pattern in a part of the search space;

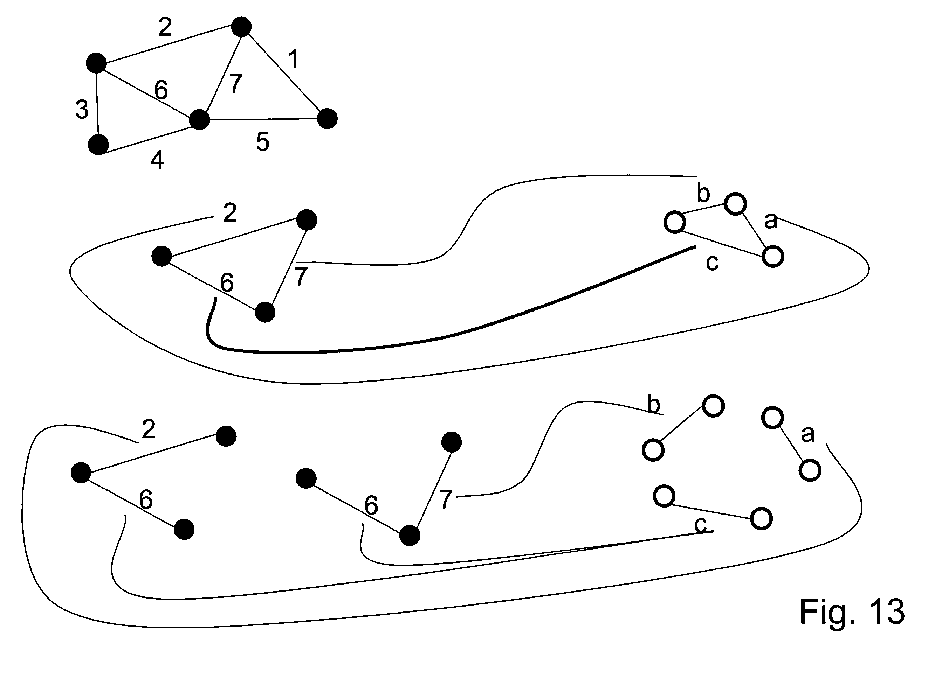

- Fig. 13: shows the reconstruction of occurrences of pattern in the whole search space applied in the method according to the invention.

Fig. 1 shows a system diagram of an information system type of information system that is addressed by this invention. Such an information system comprises an information model M that is used to store all facts about the reality. These facts are based on detections D. If there are partial detection, only, there might be an interaction I triggering a detection. The information model M is used so serve information needs by means of a presentation P of information model content. Usually there are interaction I means to control or influence the presentation, at least. The information model I is maintained by an engine for enrichment, (re)cognition, or retrieval E.

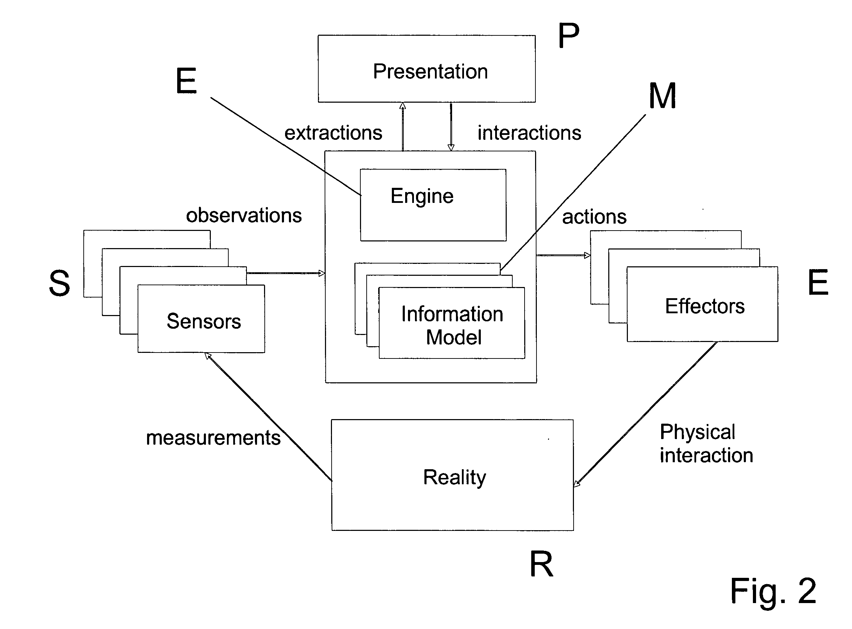

In the context of a command and control system the information model M and the engine E is usually realized as a database management system like an object database or a relational database, which is shown in Fig. 2. The engine is there usually a query engine interpreting a declarative formalized query to extract or modify a data structure that realized the information model. Such a data structure might be relations and entities that are mapped on records of attributes, or even class/instance structures. The engine E might also realize navigational and synchronizing features. The information model M is served by information sources S like sensors that map the reality R on a synthetic information model M. The information inside the information model is used to create actions to control effectors E that cause observable physical interactions. This process is controlled by interactions based on a presentation P of extractions of the information model M.

Thus one of the core components is the data structure of the information model. An analysis of this component results in the following observations: The information model has a spatial context inherited from the reality. Since the information model is a core component it has to be scalable and refine-able. Thus distribution and balancing by means of spatial decomposition will enhances performance, simplifies alignment, and allows applying fault redundancy techniques. The decomposition requires on the engine to be able to query on a part of the information model only in order to be able to cope with (re)cognition requirements. Distribution and virtualization allows economical use of resources. The information model might even inherit temporal aspects from the reality, i.e. evolution history of information objects. This kind of information might even allow predictions to investigate and recognize transitions of information objects. Ideally the model might comprise (agent) objects that actively investigate themselves, i.e. they maintain themselves based on interaction with other objects in the information model, trigger observations to complete their environment, and combine themselves to more complex observations.

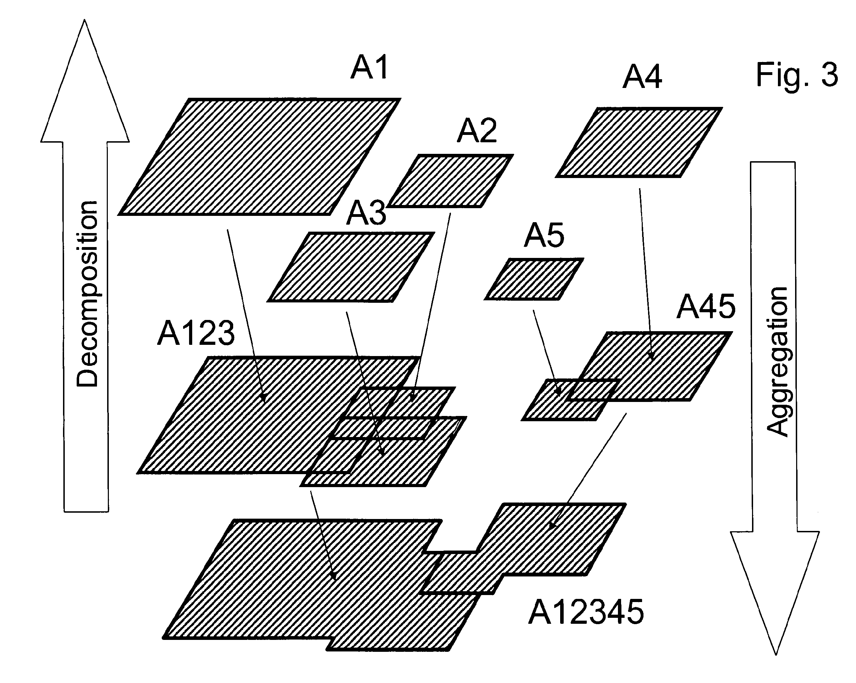

For the sake of simplicity the next two figures are restricted to a spatial data structure, or to be more precise to areas of a plane. This is intuitive and allows grasping the main idea. Fig. 3 shows a spatial decomposition illustrating the method according to the invention. In computational geometry there are well known data structures for special content. The major known data structures are described in http://donar.umiacs.umd.edu/quadtree/index.html.

The topology of the plane is used to decompose the plane A12345 into areas A1, A2, A3, A4, A5, A123, A45; where the plane A12345 is decomposed into two (the plane) covering areas A123 and A45. And the first area A123 is decomposed in the (atomic) areas A1, A2 and A3. The second area A45 is decomposed into two (atomic) areas A4 and A5.

The invariant of this structure is that the decomposition into part areas of an area is a covering of the area, i.e. the union of the part area compose or aggregate to the area.

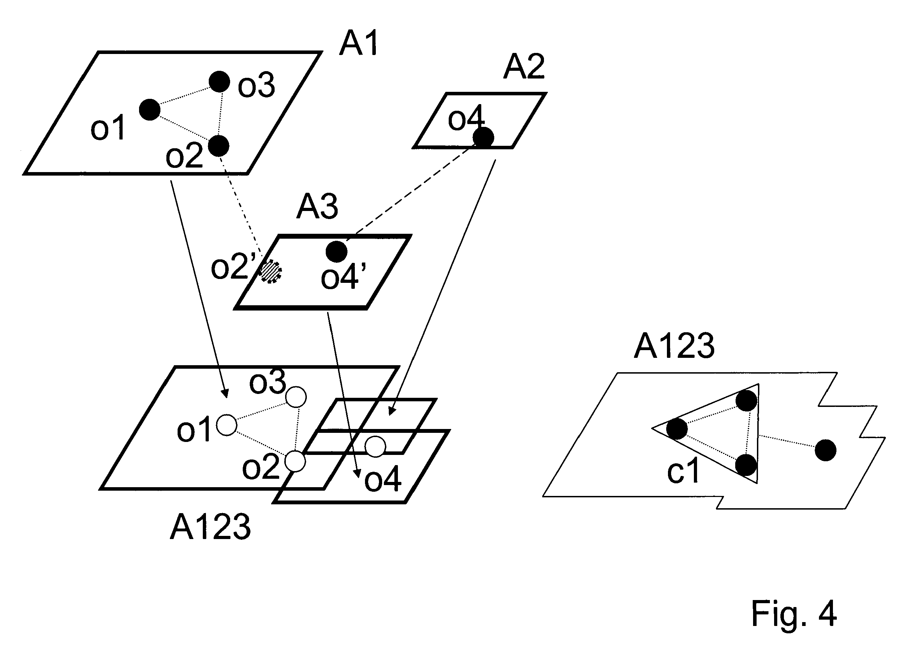

The areas A1, A2, A3 and A123 are used to attach information objects o1, o2, o3, o4 as shown in Fig 4. The information objects are attached to the area where they are relevant. That means an information object that is relevant everywhere is attached to the root area A123, information objects o1, o2, o3 that are relevant to the first area A1 are attached to this first area.

Information objects correspond to real objects and the real objects have usually a position or location that corresponds to a position in the information model. This position is used in the figure to embed information objects.

The information object o4 is attached to two areas A2 and A3 because this information object is relevant for both areas. There exists a copy o4' of the information object o4 because this object is relevant for both areas.

Although there is an overlap of area A1 and area A3 where an information object o2 is located, the object o2 is not copies onto the area A3 because it is there not relevant. This is depicted by the shaded bullet o2'.

Aggregating the information objects attached to the areas A1, A2 and A3 result in an area A123 that contains all information objects o1, o2, o3, o4 embedded.

Usually the information objects are in relation as shown by the dotted lines. These relations are embedded into the structure by the information objects' embedding. And the objects might be aggregated to a complex object shown as a triangle on the right hand side of the figure.

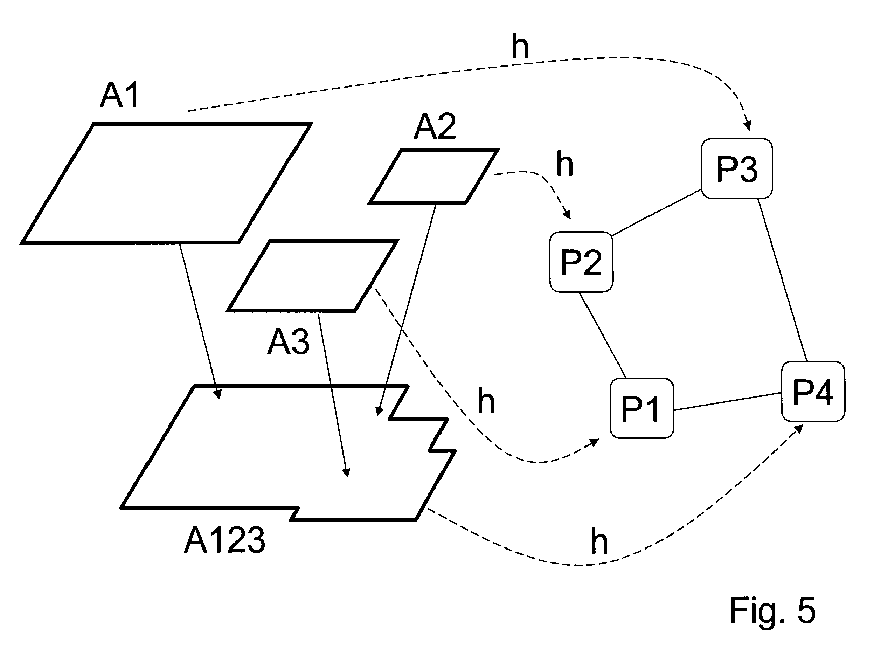

Fig. 5 shows a mapping of spatial decomposition onto peers. A peer is a part of a peer to peer computer network making use of diverse connectivity between participants in a network and the cumulative resource of network participants rather than conventional centralized resources where a relatively low number of servers provide the core value to a service or application. Peer to peer networks are typically used for connecting nodes via largely ad hoc connections. Peer to peer networks do not have the notion of clients or servers but only equal peer nodes that simultaneously function as both "clients" and "servers" to the other nodes on the network. This model of network arrangement differs from the client-server model where communication is usually to and from a central server.

In a peer to peer network each peer accts in a fully distributed manner. Information is shared by means of distributed hashing tables which are mappings from information objects in a defined domain to a peer (address) that hosts the mapped information object. Fig. 5 shows this mapping h, where the domain consists of the areas A1, A2, A3, A123 in the decomposition that are mapped on the set of peers P1, P2, P3, P4. It is noted that this mapping virtualizes resources and that the communication infrastructure resources are efficiently used since the interacting information objects are co-located on a peer. Although when using a standard peer to peer framework like Juxtapose (JXTA) or one alternative in the list in http://en.wikipedia.org/wiki/Peer-to-peer, the performance can be improved when arranging the underlying overlay network according to the decomposition applied for the information model. That means that the main communication is routed along the decomposition paths, i.e. the arrows shown in the decomposition in e.g. Fig. 1. Using a standard distributed hashing method there is usually a degree of freedom in selecting the immediate neighborhood relation. The most efficient solution is to embed the decomposition into the neighborhood relation of the overlay network in order to avoid re-hashing or re-rerouting over e.g. shortcuts. Formally, let D(A) be the set of areas in which the area A is decomposed, and let N(P) be the immediate neighbors of peer P, then the above constrain on the hashing function is: for all x in D(A): h(x) lies in N(A). It is noted that the constrain can be relaxed by using not immediate neighbors but peers with a higher distance, where distance is the length of a path in the peer to peer overlay network. Hence a feasible allocation algorithm is to allocate an area to a peer by mapping an area to a minimum distance peer that is not allocated.

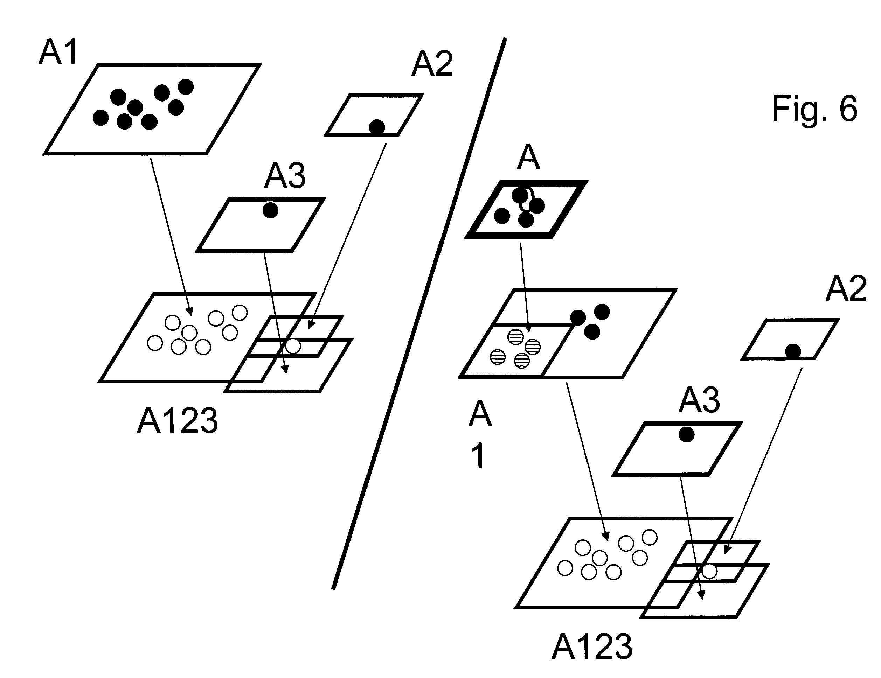

Fig. 6 illustrates a further aspect of the invention: load balancing with respect to the inherent geometry. In the left hand side of the figure it is shown that there are multiple (many) information objects attached to area A1. In such a situation it is suggested to modify the decomposition by decomposing the overloaded area. This is inconsistent with the definition of the areas and the constraint that each information object is allocated to the area where it is relevant. There are in deed two kinds of decomposition, the balancing caused and the one caused by the definition. One way to distinguish them it is to establish lazy copies or references on the decomposed area A1. This is illustrated by the horizontal hatching. As an invariant it remains that all information objects can be retrieved by refinement along the decomposition paths, which is illustrated in the figure by the white circles on the upper areas.

Using such a hashing function enables the distribution of a spatial data structure by means of a covering with respect to the geometry and an efficient routing of an information object based on regions (areas).

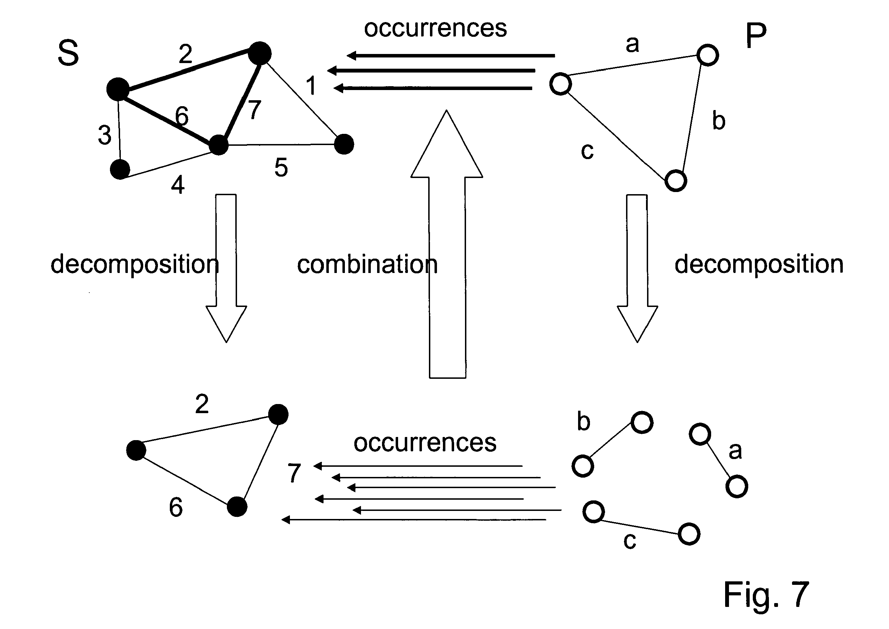

Fig. 7 shows the retrieval mechanism based on decomposition by making use of a discrete topology to illustrate the essence of a retrieval method to identify related information objects. The search space consists of fife related points shown by the bullets. The relation constitutes to the geometry of the search space. Hence for a plane this might be a Cartesian array, for time this might be a string or a list of events etc. What is important here is the neighborhood relation that is mathematically formulated as a topology. A more complex construction is the adding of additional dimensions, e.g. time to a three dimensional space topology leading a four dimensional space. Similarly any relation might constitute to the space. This approach is similar to multi-dimensional databases, where a complex array, the data cube is a conceptual representation of database. Such higher dimensional structures often results in sparse or empty data sets. To overcome a waste of storage and to reduce time and space complexity it is suggested to use data structures that allow decomposition and sparse representation like R-trees. R-trees are tree data structures that are similar to B-trees, but are used for spatial access methods i.e., for indexing multi-dimensional information. This data structure splits space with hierarchically nested, and possibly overlapping, minimum bounding rectangles as shown in the illustrative

### examples.

In such a space a query becomes a matching problem, i.e. to identify a (small sized) pattern P in a (larger, sparse) search space. The pattern P in the shown example consists of three vertices and three edges a,b,c. The search space on the left hand side consists of fife vertices and seven edges 1,2,3,4,5,6,7. An occurrence of the pattern in this example is a homomorphism from the pattern into the search space, i.e. a neighbor/structure preserving mapping of the vertices. Obviously the triangle pattern P occurs in the search space nine times. Consider the occurrence where edge b is mapped onto edge 2, edge is mapped onto edge 7, and edge c is mapped onto edge 6.

When considering the search space as whole this is for the reader obviously a matching. Bus as soon as the search space is decomposed the matching becomes trickier. In this coordinating diagram shown in Fig. 7 it is illustrated how a matching can be computed, i.e. how a pattern P can be retrieved in the decomposition of search space S. This is done by decomposing the pattern P into pattern parts, shown in the right lower corner of the diagram. This is done as it was done for the search space following a divide-and-conquer approach. Then at the lower part of the figure matching of the pattern parts are identified in a part of the search space S, i.e. a decomposition fragment. The resulting partial matching(s), i.e. matching of a part of the pattern P in a part of the search space need to be combined together in an admissible compatible way. This can be done by gluing compatible parts together using the decomposition information of the search space S and the pattern P.

Fig. 8 - Fig 13 illustrate the above described method. Fig. 8 shows an example (discrete geometric) decomposition of the search space S and a pattern P. The search space is decomposed into three parts D1, D2, and D3, where one part ifs further decomposed into two parts D11 and D12. Similarly the pattern P is decomposed into two pattern parts P1 and P2 where the latter pattern part is decomposed further into P21 and P22.

The two shown decompositions are recorded by identifying shared parts using dashed arrows. It is noted that these are not partitions and the decomposition is not unambiguously presented. For instance the pattern parts P1 and P2 might be combined alternatively shown by the two dashed dotted double arrow line.

Fig. 9 shows the example covering / decomposition that are used in the illustrative example to identify the atomic parts. Fig. 10 shows how the atomic pattern parts consisting of edge c and the atomic pattern part consisting of edge c are matched in the atomic search space part consisting of the two edges 6 and 7. In the rectangle box a compatible matching, the sub occurrence o1 is shown. It is compatible because the vertices at the end of edge 6 and 7 of the pattern parts can be glued together according to the decomposition of the pattern, which is illustrated by the dashed double arrows.

Similarly another sub occurrence is computed, shown in Fig. 11, by matching edge a with edge 6 and edge b with edge 2. One might think at this stage that there is a combinatory explosion of partial occurrences, but the pattern is usually compared to the search space very small and usually there are only view compatible occurrences. Hence the compatibility requirement reduces the result set drastically.

Fig. 12 shows the reconstruction of an occurrence of the pattern from the partial occurrences o1 and o2 shown in the previous figure. In this example for being compatible it is crucial that the edge c has to occur in both partial occurrences at edge 6 in order to be glue-able, i.e. compatible. This can be imagined to bundle the partial occurrences to sheaves, which is illustrated in the example by the bold face connection of edge c of the pattern with edge 6 of the search space part where the whole pattern occurs.

It was illustrated to embed an information model into data structure presenting a topological space in a uniform way. Hence allowing to deploy and virtualizes parts of the information model.

For the military or civil command and control domain actual situation enabling to control the situation in a feedback loop of virtual presentation of a real object, interaction forcing a change of the real object by means of effectors, and presentation of the real object's transition it is important to have reactive system behavior which is supported by the suggested data structures and methods. In advance the underlying information model handles usual a variety of observation information types that can in this application context embedded very efficient in a time-space model. Observations are required to be recombined together to useful pieces of information, i.e. more complex information within an appropriate spatial-temporal context. The described information model supports this need by the sheave of aligned part models.

In advance it is noted that the information model itself, i.e. the search space parts or the embedded information objects itself might be (inter)active, i.e. affects the real world by means of effectors' controls and the enrichment of the search space, i.e. the information model. This could be advantageously used for information model completion, where the model discovers information defects and take automatically actions that fixes defects and completes the model.

When having the realization of a search space, representing a topological site, e.g. by applying the concepts of A. Grothediek, see http://en.wikipedia.org/wiki/Grothendieck topology, the algorithm sketch becomes guiding and intuitive:
Embed (information object)
   - Compute the region where the object is or might become relevant (heuristically / exact / conservative)
   - If this region is a part then decompose this part into the region and a rest
   - Finally attach object to regions covering location of object
Decompose a region into regions
   - extract the regions from the region representing data structure
   - copy overlapping parts
   - compile data structures representing the regions
   - create references to the region
Combine (List of regions)
   - Unify information of objects in overlaps

The above illustrated recognition method suited for a spatial information model forming a site, i.e. an information combination is performed with respect to geometry is based on the insight that the decomposition guides and controls compatible combinations of matching, i.e. occurrences.

Retrieve a pattern in search space
- Decompose the pattern into pattern parts
- Compute matching the pattern parts in the parts of the sub space
- Combine compatible matching with respect to the decompositions

It is noted that there is a high degree of freedom concerning the decomposition of patterns which can be used to apply e.g. finite differencing. That means an efficient heuristic is to decompose a pattern into sparse occurring pattern parts and puzzling from the matches the remaining parts of the pattern.

The decomposition property allows applying agent and object-oriented techniques. Thus the definition of the processing (information aggregation, fusion, etc) is canonically object oriented since the observations are embedded and results of processing can be attached to regions since the main results inherit the spatial properties.

The resulting claimed system has and could provide a dynamic, true and integrated image of the reality by means of topologically integration.

## Claims

1. A method for integrating information objects sharing a common geometry into a spatial data structure, the method comprising the step of inserting an information object into the data structure at an anchor, **characterized in that** anchor is defined by a region with respect to the geometry, where the information object is relevant.

2. The method according to claim 1, wherein the spatial data structure is distributed by means of a covering with respect to the geometry and where the information object is routed according to the region, where the information object is relevant.

3. The method according to claim 2, wherein the spatial data structure is maintained by decomposing a covering when a covering is dense occupied by extending or by composing when a region is spare occupied.

4. The method according to claim 2 or 3, wherein the covering comprises overlapping where information objects are synchronized.

5. The method according to claim 1, wherein the geometry comprises a temporal dimension.

6. The method according to one of the previous claims, **characterized in that** the region is where the information object is relevant is updated and the spatial data structure is reorganized accordingly.

7. A method for retrieving relevant information object in a spatial data structure within a region **characterized by** traversing the data structure within coverings containing the region until the region is identified and collecting the information objects from that region.

8. The method according to claim 7, **characterized in that** while traversing the data structure, the data structure is optimized for fast access.

9. The method according to claim 7 or 8 **characterized in that** the region is derived from a pattern of an information object.

10. The method according to claim 9, **characterized in that** the region is derived from the coverage derived from a complex pattern of a set of interrelated information objects.

11. A system for integrating information objects sharing a common geometry, **characterized by** comprising a storage having a spatial data structure for storing and retrieving regions such that information object are inserted into the data structure at an anchor defined by a region with respect to the geometry, where the respective information object is relevant.

12. A method for integrating a system, comprising the steps of defining a common geometry, a set of information objects sharing the common geometry, and relevant regions of objects for generically integrating information objects according to claim 1.
